# EUROPEAN PATENT APPLICATION

(11) **EP 4 019 574 A1**
(43) Date of publication of application: **29.06.2022**
(21) Application number: 21216981.7
(22) Date of filing: 22.12.2021
(51) Int. Cl.: C08J 9/00, A47C 27/14

(54) **THERMAL MANGAGEMENT FOAM**

(30) Priority: 22.12.2020 DE 102020134615
(71) Applicant: Gealan Formteile GmbH, 95145 Oberkotzau (DE)
(72) Inventor: SAUNUS, Christian, 08223 Grünbach (DE); BUHEITEL, Christian, 95111 Rehau (DE)
(74) Representative: Fleuchaus, Michael A.

(57) **Abstract**

A method of producing a plastic material, and a product (30; 40; 50; 60) comprising such a material, the method comprising: forming a homogenous first mass by mixing (200) polyol and at least one phase change material (PCM) in powder or slurry form; and producing a homogenous second mass by admixing (22) isocyanate to the homogenous first mass, while a temperature of the PCM is above the melting point of the PCM and below the boiling point of the PCM. The homogenous second mass has a PCM content of less than 60% by mass.

## Description

### Related Application

This application claims the benefit of the filing date of German patent application no. 10 2020 134 615.8 filed 22 December 2020.

### Field of the Invention

The present invention relates to a polyurethane foam incorporating at least one phase change material (PCM), and a method of producing such a polyurethane foam.

### Background

PCMs typically have a defined melting point that enables the use of the energy of the latent heat absorbed or released during the phase change (between solid and liquid) for thermal energy storage. PCMs make use of the heat effect by absorbing thermal energy when the surrounding temperature is higher than the melting point of the PCM, and releasing thermal energy when the surrounding temperature is lower than the melting point of the PCM.

Another class of PCMs are the so-called solid to solid PCMS, which undergo a solid/solid phase transition in which heat is absorbed or released.

It is known to include a microencapsulated PCM in polyurethane foam for use in mattresses or pillows, as described in DE 20 2010 006 700 U1, so that the resulting mattress or pillow helps to regulate the user's temperature. The microencapsulated PCM of DE 20 2010 006 700 U1 constitutes between 3% and 30% by weight of the final material, owing to the manufacturing process, thus defining an upper limit of the potential thermal energy storage.

### Summary

The object of the present invention is to provide an improved plastic material.

According to a first aspect of the present invention, there is provided a method of producing a plastic material, the method comprising:
forming a homogenous first mass by mixing polyol and at least one phase change material (PCM) in powder or slurry form; and
producing a homogenous second mass (in a so-called foaming step, in which a polyurethane foam is formed) by admixing isocyanate to the homogenous first mass while a temperature of the PCM is above the melting point of the PCM and below the boiling point of the PCM;
wherein the homogenous second mass has a PCM content of less than 60% by mass.

Thus, to produce a polyurethane (PUR) foam, a first component (polyol) is combined with a second component (an isocyanate, such as a di- or tri-isocyanate). Conducting the foaming step of the method at a temperature above the melting point(s) of the PCM(s) allows the reaction heat (of polyol and isocyanate) to be retained in the foaming process, as absorption of that heat by the PCM(s) is avoided or reduced. That absorption can interfere with the foaming process, which can decrease the quality of the resulting foam.

The method may include preheating the PCM before forming the first mass to a temperature above the melting point of the PCM and below the boiling point of the PCM (such that the PCM is a liquid).

In certain embodiments, the method comprises forming the first mass while the first mass is above the melting point of the PCM and below the boiling point of the PCM.

Numerous approaches may be employed so that the temperature of the preheated PCM (which may be essentially the temperature of the mixture) stays above the melting point of the PCM and below the boiling point of the PCM during the forming of the homogenous first mass. For example, the polyol and/or the preheated PCM may be sufficiently preheated so that their mixed temperature stays above the melting point of the PCM until the homogenous first mass has been formed. An external heat source can be applied, such as by performing the mixing in a heated environment. Indeed, in some cases the ambient environmental temperature may be such that this condition is met. Another approach involves applying heat to the vessel in which mixing is conducted.

In certain embodiments, the homogenous second mass has a mass ratio of isocyanate to polyol greater than that of a corresponding conventional-process polyurethane foam (which is typically 15% to 85%). However, it will be appreciated by the skilled person that the most appropriate mass ratio (whether above or below that of a corresponding conventional process) will depend on the specific constituents of the foam and the desired properties of the resulting product.

In some embodiments, however, this mass ratio is above 15%, above 20% or above 30%. In certain embodiments, this mass ratio is between 20% to 80% and 30% to 70%. In certain embodiments, the ratio is between 23% to 77% and 27% to 73%. In a particular embodiment, the ratio is approximately 25% to 75%.

The temperature of the PCM may be above the melting point of the PCM while forming the second mass, owing to residual heat of the first mass and/or application of heat from an external heat source to the first mass during or after formation of the first mass.

The method may comprise heating the second mass with an external heat source during formation of the second mass.

The PCM content of the second mass is based on the PCM content relative to the polyol, the isocyanate and, if the PCM is in encapsulated form, the shell material of the encapsulated PCM. (The optional low viscosity fluid, discussed below, is not considered in this calculation, as that fluid is typically substantially lost during drying.)

In some embodiments, the homogenous second mass has a PCM content of at least 35% by mass, in certain embodiments of at least 40% by mass, and in particular embodiments of at least 45% by mass. The optimal PCM content of the homogenous second mass depends on implementation particulars, such as the specific intended application and manufacturing process, and can be ascertained by simple trials. However, it is of value to note both that, with a low percentage of PCM, it is generally easier to handle the second mass during manufacturing (as viscosity is low), while a high percentage of PCM may be desirable because it increases the storable thermal energy. However, it has been found that, above a PCM content of 60% by mass, the consistency of the second mass becomes very tough with excessive viscosity.

In an embodiment, the method comprises placing the homogenous second mass into a form or onto a surface, such as by spreading. The method may include applying a release agent (such as a grease) to the form or surface to facilitate removal therefrom after the second mass has partially orfully dried.

In an embodiment, the method comprises preheating the polyol, such as to a temperature higher than the melting point of the PCM(s). A high percentage of PCM can cause a significant increase in the viscosity of the homogenous first and second masses, which-at certain percentages of PCM-can complicate the processing and may, in extreme cases, compromise the homogenisation of the first mass (leading to numerous local accumulations of PCM). Also, as greater PCM content generally causes greater viscosity, for any particular degree of this polyol preheating, the greater the amount of PCM that is used, the greater the risk of homogenisation failure due to increased viscosity.

Preheating the polyol decreases the viscosity of the first and/or second masses, thereby facilitating the homogenisation of the first mass and simplifying down-stream processing. Further, preheating the polyol to a temperature higher than the melting point of the PCM(s) assists the maintenance of the first mass (during its mixing) above the melting point of the PCM(s). Indeed, this may avoid any need to form the first mass with the external application of heat or in a heated environment.

In an embodiment, the method comprises, before forming the first mass, mixing the PCM with a fluid that, in its liquid phase, has a viscosity lowerthan the viscosity of the polyol. The fluid is selected to have little or minimal influence on the reaction between the polyol and the isocyanate. In addition, the fluid should preferably not react with the PCM, the polyol or the isocyanate (or any shell material of encapsulated PCM).

In some examples, the fluid is at most 15% by mass of the combined mass of the fluid, the PCM (and shell material if encapsulated), the polyol and the isocyanate as, above that level, the reaction between the polyol and isocyanate can be compromised, and the final product lack dimensional stability.

In particular embodiments, the fluid is from 5% to 15% by mass of the combined mass of the fluid, the PCM (and shell material if encapsulated), the polyol and the isocyanate. A fluid quantity of less than 5% by mass is acceptable but may have less effect than desired in reducing viscosity.

The fluid and preheated PCM may be mixed before or while mixing the polyol and the preheated PCM. If before, the step of mixing the polyol and the preheated PCM comprises polyol and the preheated PCM/fluid mixture.

In certain embodiment, conveniently, the fluid is a liquid, such as-for example-water or isopropanol (viz. isopropyl alcohol). If the fluid is a gas, the method may be performed in an atmosphere of or including the gas but is advantageously performed by directing a stream of the gas onto or into the polyol and the preheated PCM while forming the first mass.

Thus, by mixing the preheated PCM with a relatively low viscosity fluid, a lower viscosity of the first and second masses can be achieved, further facilitating or simplifying down-stream processing of the resulting material.

In an embodiment, the fluid is preheated before mixing the fluid with the PCM, whether before or after preheating the PCM. This may be especially advantageous of the fluid is to be mixed with the PCM after preheating the PCM, so that the temperature of the preheated PCM is at least approximately maintained when the fluid is mixed therewith.

In an alternative approach, the method includes mixing an additive to the polyol to reduce the viscosity of the polyol, before mixing the polyol with the preheated PCM.

The PCM can be in many forms, including organic PCMs (such as paraffins, lipids and sugar alcohols) and salt hydrate PCMs, and mixtures thereof. Readily available and suitable PCMs include those manufactured by Microtek Laboratories, Inc. of Dayton, OH, U.S.A, such as Nextek32D (trade mark), Nextek 18D (trade mark), Nextek 6D (trade mark), and Micronal DS 5040(trade mark).

PCMs with very high melting points are likely not to be useful for most applications (and may have too high a melting point for the particular product being manufactured). In certain embodiments, therefore, producing the homogenous second mass (i.e. the foaming step) is conducted at a maximum of 65 degrees C and, in certain other embodiments, at a maximum of 60 degrees C.

Some PCMs are available as a slurry mass, but it is expected that it will generally be easier to use the PCM in powder form. This is because a powder is commonly easier to handle than a slurry, especially if it is to be transported within a factory by a conveyor system. It is appreciated that some PCMs are provided in cake form, and it will be understood that such a PCM can be converted into a powder or slurry for use in the present invention.

In some embodiments, the at least one PCM is a powder with a particle fineness (effectively mean diameter) of less than 50 micrometres, in certain other embodiments of less than 35 micrometres and, in still other embodiments of less than 20 micrometres. A small particle fineness facilitates the homogeneity of the first mass.

The PCM may be in unencapsulated form or in encapsulated form (that is, enclosed in a shell material, typically a polymer), but the latter-in which typically each particle is individually encapsulated-is advantageous: encapsulation generally makes the PCM easier to handle and the encapsulation provides protection (in the manufacturing process and during use) against temperature peaks in the PCM itself. The shell material minimizes the risk of burning the PCM during manufacture.

Desirably, if the PCM is in encapsulated form, any preheating of the PCM should not raise the temperature of the shell material encapsulating the PCM above the melting point of the shell material.

In an embodiment, the melting point of the PCM is 25°C to 45°C.

In an embodiment, the method includes preheating the PCM (i.e. before forming the first mass) to a temperature of from 40°C to 60°C.

In an embodiment, the method includes preheating the polyol (i.e. before forming the first mass) to a temperature of from 40°C to 60°C.

In a particular embodiment, the method includes preheating the PCM and the polyol (i.e. before forming the first mass) to approximately the same temperature.

In an embodiment, the mixing mass ratio of polyol to isocyanate is from 6:1 to 3:1.

These exemplary embodiments may be combined. For example, in an embodiment, the melting point of the PCM is 25°C to 45°C and the mass percentage of PCM is 40% to 60%. In some embodiments, the preheating temperature of the PCM is 40°C to 60°C and the preheating temperature of the polyol is 40°C to 60°C. In another embodiment, the melting point of the PCM is 25°C to 45°C and the preheating temperature of the polyol is 40°C to 60°C.

In certain embodiments, the melting point of the PCM is 25°C to 45°C and the preheating temperature of the PCM is 40°C to 60°C, subject to being greater than the melting point.

According to a second aspect of the present invention, there is provided a plastic material produced according to the first aspect.

According to a third aspect of the present invention, there is provided a product or article that partially or entirely comprises a plastic material produced according to the first aspect.

Possible products comprising such a plastic material include mattresses, pillows, electronic devices (especially devices including one or more batteries, such as smartphones and laptop computers), car batteries, e-bike batteries, and the like. For example, an electronic devices typically has a plastic housing; the housing can be made of or include the plastic material of the invention (such as a PUR-foam), or provided with a lining thereof, so that thermal energy from the electronic device can be absorbed by the PCM. This heat exchange/balancing enables a lower/more steady temperature of the device's battery during charging and/or discharging, leading to an improved battery lifetime and an increased number of battery charging/discharging cycles.

Other possible products according to this aspect include, for example, shoes, sport articles, accessories or equipment. The plastic material can be integrated into sportswear, such as a cycling jerseys, cycling helmets, shoes, running and athletic dress, or the like. Grips of handlebars (or handles of other sporting equipment) can be produced from the plastic material according to the present invention, to facilitate heat transfer from a user's hands to the component of the plastic material. This produces a cooling effect on the hands of the user.

To integrate the product into clothing, the plastic material according to the present invention can be produced as a pad, such as including a gluing surface. This pad can be usefully included in garments where thermal exchange is useful, such as in protective wear for firefighters.

It should be noted that any of the various individual features of each of the above aspects of the invention, and any of the various individual features of the embodiments described herein including in the claims, can be combined as suitable and desired.

### Brief Description of the Drawing

In order that the invention may be more clearly ascertained, embodiments will now be described by way of example with reference to the following drawing, in which:
Figure 1 is a flow diagram illustrating the production of a product comprising a plastic material according to an embodiment of the present invention.
Figures 2A and 2B are schematic plan and cross-sectional views, respectively, of a holder or case for an electronic device, the holder or case comprising PUR according to an embodiment of the present invention.
Figures 3A and 3B are schematic plan and cross-sectional views of a general heat absorbing pad comprising PUR according to an embodiment of the present invention.
Figure 4 is a schematic view of bicycle handlebars provided with a pair of grips comprising PUR according to an embodiment of the present invention.
Figures 5A and 5B are schematic plan and cross-sectional views of a heat absorbing pad for clothing, the pad comprising PUR according to an embodiment of the present invention.

### Detailed description

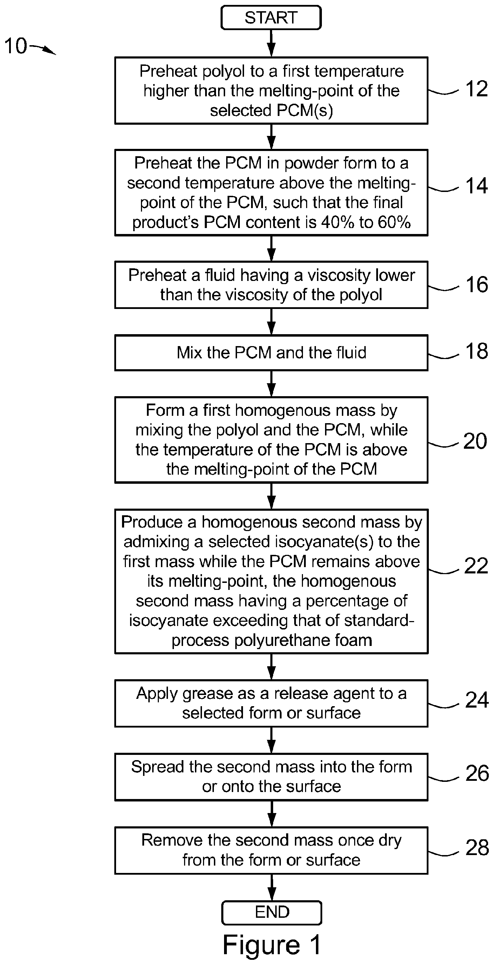

Figure 1 is a flow diagram 10 illustrating the production of a product comprising a plastic material in the form of a thermal management foam according to an embodiment of the present invention.

At step 12, a quantity of polyol is preheated to a first temperature above the melting point of the selected PCM, being a temperature above the melting point of the PCM but below its boiling point and in this example from 40°C to 60°C.

At step 14, a quantity of PCM in powder form (such that, in the final product, the PCM content of from 40% to 60%) is preheated to a second temperature, being a temperature above the melting point of the PCM but below its boiling point. The PCM has a melting point of from 25°C to 45°C.

At step 16, a fluid having a viscosity lower than the viscosity of the polyol, such as a liquid (e.g. water or isopropanol), is preheated to approximately the second temperature.

At step 18, the PCM is mixed with the fluid.

At step 20, a homogenous first mass is formed by mixing the polyol and the preheated PCM (in the form of the PCM/fluid mixture in this example), while the temperature of the PCM (so essentially the temperature of the first mass) is the melting point of the PCM. The latter condition may require applying heat, but will commonly be met by the raised temperature of the components being mixed.

At step 22, a homogenous second mass is formed by admixing a selected isocyanate or isocyanates to the first mass, the selected isocyanate or isocyanates being in a quantity such that the homogenous second mass has a percentage of isocyanate exceeding that of standard-process polyurethane foam. In this example, the mass ratio of polyol to isocyanate employed is from 6:1 to 3:1. This step is performed while the PCM is or is maintained above its melting-point; this can be done by sufficiently preheatingone or more constituents of the first mass (as in this example), by application of heat from an external source to the first mass (either during or after its formation), and/or by application of heat from an external source to the second mass during its formation.

At step 24, a release agent in the form of a grease is applied to a selected form or surface, and at step 26 the homogenous second mass is placed into the form or onto the surface, such as by spreading.

At step 28, the second mass-once dry-is removed from the form or surface. The procedure then ends.

The dry second mass is the desired PUR, and may then be cut or otherwise shaped as desired into a desired product, for as a component of a desired product.

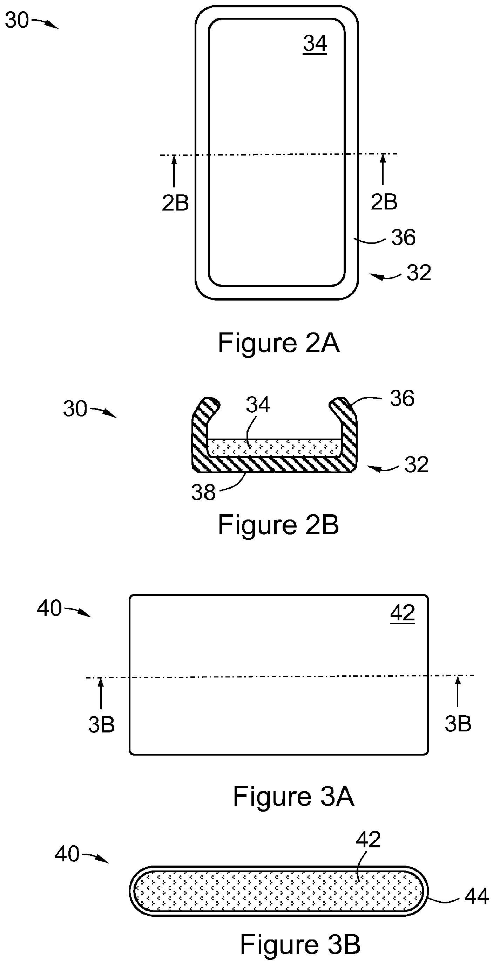

Figures 2A to 5B illustrate schematically several exemplary products that comprise PUR (incorporating a PCM) according to embodiments of the present invention.

Figures 2A and 2B are schematic plan and cross-sectional views, respectively, of a holder or case 30 for an electronic device, is this example a mobile telephone or tablet computing device. Holder or case 30 comprises a resilient plastic housing 32 (of, for example, silicone) that includes an upwardly extending resilient peripheral wall 36, and a lining 34 of PUR foam according to the present invention. Lining 34 is glued to a rear wall 38 of housing 32, within housing 32. In use, the electronic device is accommodated within holder or case 30 by peripheral wall 36, which also urges the electronic device against lining34. Lining 34 is thus sandwiched between the electronic device and rear wall 38 of housing 32. The rear surface of the electronic device is held against lining 34, such that thermal energy from the electronic device during use is absorbed by the PCM of the PUR foam that constitutes lining 34.

Other possible products according to this aspect include, for example, sport articles, accessories or equipment. The plastic material can be integrated into sportswear, such as a cyclingjerseys, cycling helmets, running and athletic dress, or the like. Grips of handlebars (or handles of other sporting equipment) can be produced from the plastic material according to the present invention, to facilitate heat transfer from a user's hands to the component of the plastic material. This produces a cooling effect on the hands of the user.

Figures 3A and 3B are schematic plan and cross-sectional views of a general heat absorbing pad 40 for use for any desired heat generating device of corresponding dimensions. For example, pad 40 may be sized to support an electronic device in the form of a laptop or

tablet computer, or to be integrated into a docking station (with a cavity for receiving pad 40) for such a device; in such applications, pad 40 may be, for example, comparable in size to the supported device (e.g. 30 ± 5 cm 20 ± 5 cm).

Referring to figures 3A and 3B, pad 40 comprises an inner core 42 of PUR (including PCM) according to the present invention, and an outer covering 44 of a flexible, thermally conducting material (such as aluminium foil) both to protect core 42 and to conduct heat from the electronic device to core 42.

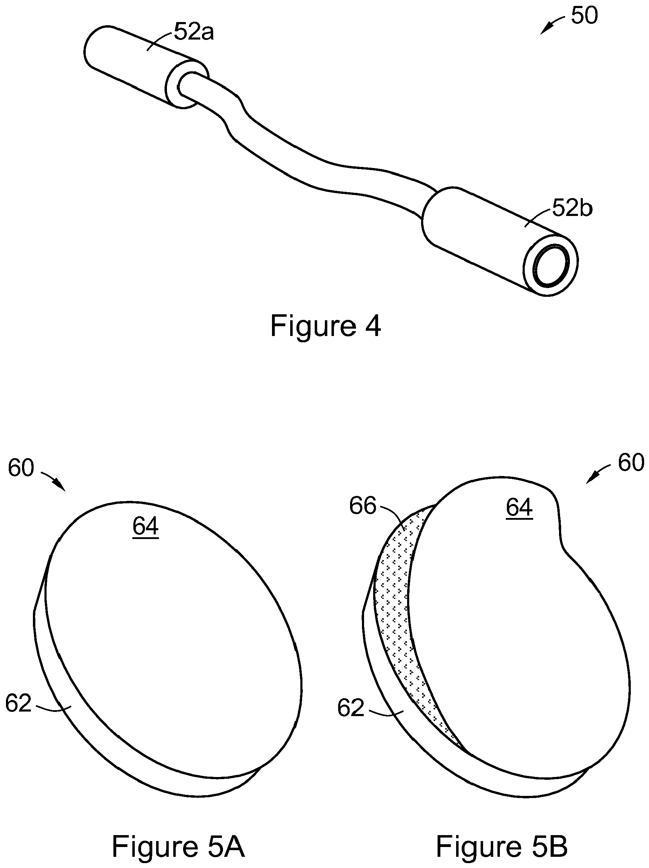

Figure 4 is a schematic view of bicycle handlebars 50 provided with a pair of grips 52a, 52b. As with conventional grips, grips 52a, 52b improve a cyclist's comfort and grip. However, grips 52a, 52b are made of PUR (incorporating a PCM) according to the present invention, so absorb heat thereby facilitating heat transfer from the cyclist's hands. This cooling effect can increase the comfort of the cyclist. In addition, if handlebars 50 are of a metal such as steel, handlebars 50 can act as a heat sink and, as a result, grips 52a, 52b will increase minimally in temperature during use so retain efficacy. This may be contrasted with conventional grips, many of which act as a thermal insulator between the cyclist's hands and the handlebars.

Figures 5A and 5B are schematic plan and cross-sectional views of a heat absorbing pad 60 for clothing in which thermal exchange is useful, especially sportswear and protective wear (such as for firefighters). Heat absorbing pad 60 includes a PUR component 62 of PUR (incorporating a PCM) according to the present invention, formed or cut as required by the intended use and garment. In the illustrated example, PUR component 62 is oval in shape, of approximately 10 to 20 cm in length, 5 to 15 cm in width and 5 to 15 mm in thickness. It will be appreciated, however, that PUR component 62 can be of essentially any dimensions as dictated by the intended use and garment.

Heat absorbing pad 60 includes a protective layer 64 of thermally conductive material (such as aluminium foil) arranged so that, in use, it is directed towards the garment's wearer-though not necessarily in direct contact with the wearer's skin. Heat absorbing pad 60 also includes a layer of glue 66 for adhering protective layer 64 to PUR component 62.

Alternatively, protective layer 64 may be configured to protect PUR component 62 before use (i.e. before being affixed to the garment), with layer of glue 66 provided to adhere PUR component 62 to the garment. In this variation, glue 66 is selected such that to allow (i) protective layer 64 to be peeled off, and (ii) subsequent adhesion of PUR component 62 to the garment.

### EXAMPLES

Test samples of PUR foam (incorporating a PCM) were produced according to the present invention, and in particular according to the process illustrated in figure 1 (with some departures therefrom, as described below).

The samples had a 40% PCM content. The PCM was Nextek 32D (trade mark), comprising a PCM powder encapsulated with an aromatic thermosetting copolyester, with a melting point of 32 degrees C. A synthetic grease (Rivolta S.K.D. 4002 (trade mark), provided by Bremer& Leguil GmbH of Duisburg, North Rhine-Westphalia, Germany), was employed as a release agent with some samples, while others samples were prepared without use of a release agent.

Water was employed as a low viscosity liquid, preheated to 40 degrees C. In each case, the PCM and polyol were preheated to 40 degrees C, then mixed (during which the temperature of the mixture remained above the melting point of the PCM, though without being actively heated).

Each second mass was placed into a form comprising a shallow cylinder (of 6 cm or 8 cm in diameter), in which they were dried in an oven at 40 degrees C for one hour, then removed from the respective forms.

The resulting PUR foam was in each case soft and flexible, if slightly brittle. The surface quality of those samples with which the release agent was employed was significantly improved.

It will be understood to persons skilled in the art of the invention that many modifications may be made without departing from the scope of the invention. In particular it will be apparent that certain features of embodiments of the invention can be employed to form further embodiments.

It is also to be understood that, if any prior art is referred to herein, such reference does not constitute an admission that the prior art forms a part of the common general knowledge in the art in any country.

In the claims which follow and in the preceding description of the invention, except where the context requires otherwise due to express language or necessary implication, the word "comprise" or variations such as "comprises" or "comprising" is used in an inclusive sense, i.e. to specify the presence of the stated features but not to preclude the presence or addition of further features in various embodiments of the invention.

## Claims

1. A method of producing a plastic material, the method comprising:
forming a homogenous first mass by mixing (200) polyol and at least one phase change material (PCM) in powder or slurry form; and
producing a homogenous second mass by admixing (22) isocyanate to the homogenous first mass while a temperature of the PCM is above the melting point of the PCM and below the boiling point of the PCM;
wherein the homogenous second mass has a PCM content of less than 60% by mass.

2. A method as claimed in claim 1, comprising preheating (14) the PCM before forming the first mass to a temperature above the melting point of the PCM and below the boiling point of the PCM.

3. A method as claimed in either claim 1 or 2, comprising forming the first mass while the first mass is above the melting point of the PCM and below the boiling point of the PCM.

4. A method as claimed in any one of the preceding claims, wherein the temperature of the PCM is above the melting point of the PCM while forming the second mass, owing to residual heat of the first mass and/or application of heat from an external heat source to the first mass during or after formation of the first mass.

5. A method as claimed in any one of the preceding claims, comprising heating the second mass with an external heat source during formation of the second mass.

6. A method as claimed in any one of the preceding claims, wherein the mass ratio of isocyanate to polyol is greater than 15%, or greater than 20%, or greater than 30%.

7. A method as claimed in any one of the preceding claims, wherein the homogenous second mass has a PCM content of at least 35% by mass, at least 40% by mass, or at least 45% by mass.

8. A method as claimed in any one of the preceding claims, comprising placing (26) the homogenous second mass into a form or onto a surface.

9. A method as claimed in any one of the preceding claims, comprising (12) preheating the polyol, such as to a temperature higher than the melting point of the PCM.

10. A method as claimed in anyone of the preceding claims, comprising, before forming the first mass, mixing (18) the PCM with a fluid, such as comprising water, isopropanol or another liquid, that, in its liquid phase, has a viscosity lower than the viscosity of the polyol, the fluid being selected to have little or minimal influence on the reaction between the polyol and the isocyanate and being from 5% to 15% by mass of the combined mass of the fluid, the PCM, any shell material encapsulating the PCM, the polyol and the isocyanate.

11. A method as claimed in claim 10, comprising preheating (16) the fluid before mixing the fluid with the PCM.

12. A method as claimed in any one of the preceding claims, wherein the PCM is in encapsulated form, and any preheating of the PCM does not raise the temperature of shell material encapsulating the PCM above the melting point of the shell material.

13. A method as claimed in any one of the preceding claims, wherein the melting point of the PCM is 25°C to 45°C.

14. Amethod as claimed in any one of the preceding claims, comprising preheating the PCM and/or the polyol to a temperature of from 40°C to 60°C.

15. A method as claimed in any one of the preceding claims, comprising preheating the PCM and the polyol to approximately the same temperature.

16. A method as claimed in anyone of the preceding claims, wherein the mixing mass ratio of polyol to isocyanate is from 6:1 to 3:1.

17. A product (30; 40; 50; 60) comprising a plastic material (34; 42; 62) produced according to any one of claims 1 to 16.

18. A product as claimed in claim 17, comprising a mattress, a pillow, an electronic device, a case or holder or support (30; 40) for an electronic device, a car or e-bike battery, a garment or insert therefor (60), sportswear, a shoe, protective wear, a sports accessory, sports equipment, or a grip (52a; 52b).
